# EUROPEAN PATENT APPLICATION

(11) **EP 4 549 122 A1**
(43) Date of publication of application: **07.05.2025**
(21) Application number: 23830953.8
(22) Date of filing: 01.06.2023
(51) Int. Cl.: B29C 33/32, B29C 45/64, H01F 13/00

(54) **MAGNETIC CLAMPING DEVICE**

(30) Priority: 01.07.2022 JP 2022106966
(71) Applicant: Kosmek Ltd., Kobe-shi, Hyogo 651-2241 (JP)
(72) Inventor: YOSHIDA, Masakazu, Kobe City, Hyogo 651-2241 (JP)
(74) Representative: Kramer Barske Schmidtchen Patentanwälte PartG mbB
(86) International application number: PCT/JP2023/020414
(87) International publication number: WO 2024/004503

(57) **Abstract**

Provided is a magnetic clamping device in which the power consumption of a magnetizing coil made of a magnet material capable of reversing the polarity is reduced. A magnetic clamping device 10 comprises: an alnico magnet 16 in which the polarity of can be reversed by a neodymium magnet 18 and a magnetizing coil 17; a controller 7; a rectification circuit 31; and a first circulating circuit 32. The rectification circuit 31 performs half-wave rectification on an alternating-current power source, supplies positive-side pulses to the magnetizing coil 17 for a given period when being instructed the controller 7 to magnetize the magnetizing coil 17, and supplies negative-side pulses to the magnetizing coil 17 for a given period when being instructed to demagnetize the same. The first circulating circuit 32 includes a diode 34 and a switch 35 that are serially connected to each other, returns a current obtained from back electromotive force resulting from turning on the switch 35 during the period in which magnetization is instructed by the controller 7 and forming a closed citcuit with the magnetizing coil 17, and turns off the switch 35 during the period in which demagnetization of the magnetizing coil 17 is instructed by the controller 7.

## Description

### TECHNICAL FIELD

The present invention relates to a magnetic clamping device that utilizes magnetic adsorption force to clamp/release.

In a magnetizer for producing a magnet by magnetizing a magnet material, a current is applied into a coil to generate a magnetic field inside the coil, and the magnet material is supplied into the coil to magnetize the magnet material. The direction of the magnetic field depends on the direction of the current flowing through the coil, and the strength of the magnetic field depends on the strength of the current flowing through the coil. In the magnetizer to which the magnet material is magnetized, "saturation magnetization" is performed, in which the magnet material is magnetized to a limit point "saturation point" at which the magnet material is magnetized. Patent Document 1 discloses a capacitor-type magnetizer as an example of such a magnetizer

In the capacitor-type magnetizer of Patent Document 1, alternating current from a high-frequency transformer is rectified in both waves to create a pulsating current, and a charging capacitor is charged in 10 mV increments, and when charging reaches 2.5 kV, the current in the charging capacitor is flowed through to drive a magnetizing coil. A series circuit of an SCR, which is a switching element for magnetization, and the magnetizing coil is connected to the charging capacitor, and a flywheel diode is connected in parallel to the series circuit. When the magnet material is inserted into the magnetizing coil and the SCR is ignited, a magnetizing current of, for example, about 10 kA is instantaneously supplied to the magnetizing coil. The resonance between the magnetizing coil and the charging capacitor causes the SCR to extinguish due to the reverse voltage after the current has reached the peak and to discharge through the flywheel diode. By sequentially conveying the magnet material into the magnetizing coil, the permanent magnet is mass-produced by magnetizing the magnet material

As a device for magnetizing a magnet material, there is known a magnetic clamping device for winding a coil around a magnet material and switching the magnetization/demagnetization in addition to a magnetizer for producing a magnet through the magnet material in the coil. For example, a magnetic clamping device for magnetically fixing a mold shown in Patent Document 2 includes a magnet whose polarity cannot be reversed and a magnet material whose polarity can be reversed (alnico magnet), and can switch between a release state in which a magnet uncapable of reversing polarity and a magnet material capable of reversing polarity configure a magnetic circuit closed in series to release a mold, and a lock state in which a magnet uncapable of reversing polarity and a magnet material capable of reversing polarity are connected in parallel to configure a magnetic circuit connected in series with a mold to clamp the mold, by controlling the magnetic polarity of the Alnico magnet by means of a magnetizing coil circulating around the Alnico magnet.

### PRIOR ART LITERATURE

### PATENT LITERATURE

Patent Document 1: Japanese Unexamined Patent Application Publication No. 2006-230124
Patent Document 2: WO 2019/202957

### DISCLOSURE OF THE INVENTION

### PROBLEMS TO BE SOLVED BY THE INVENTION

The capacitor-type magnetizer of Patent Document 1 magnetizes unmagnetized magnet material, in which magnetization is performed by instantaneously flowing current stored in the charging capacitor once. In contrast, in a magnetic clamping device, the magnet material capable of reversing polarity (alnico magnet) not only reverses the polarity held by itself, but cancels a magnetic flux flowing from adjacent magnets uncapable of reversing polarity. Therefore, sufficient current must continue to flow through a coil wound around the alnico magnet until the magnetic poles of the alnico magnet are reversed and the magnetic flux is saturated. However, large direct current power sources that can keep direct current values for some time intervals are expensive.

Thus, in magnetic clamping devices, half-wave rectification of the alternating-current power source is used to control the direction of the current by, for example, supplying the upper half-sine wave to the magnetizing coil during clamping and the lower half-sine wave to the magnetizing coil during release, in order to reduce the cost of the power source. The half-sine wave is a waveform of only the positive or negative side of the rectified alternating current power source, and a single wave (referred to as a "pulse") of the half-sine wave is about 10 ms. long. A large number of this is applied to the magnetizing coil to generate a magnetic flux. The magnetic flux held by the alnico magnet and the magnetic flux flowing in from the magnet uncapable of reversing polarity are added to the generated magnetic flux. By applying pulses several times, the polarity of the alnico magnet is gradually reversed, eventually reaching saturation magnetic flux. Therefore, the power is consumed as many times as the number of pulses provided until the magnetic flux is saturated.

It is an object of the present invention to provide a magnetic clamping device with reduced power consumption by reducing the number of pulses applied to a magnetizing coil of a magnet material capable of reversing polarity.

### MEANS TO SOLVE THE PROBLEM

The magnetic clamping device of the present invention includes: a controller; a rectification circuit that performs half-wave rectification on the alternating current power source and supplies positive side pulses to the magnetizing coil of the reversible magnet for a predetermined period when the magnetizing coil is instructed to magnetize by the controller, and supplies a predetermined number of negative side pulses to the magnetizing coil of the reversible magnet when demagnetization is instructed; and a first circulating circuit in which a diode and a switch are connected in series, and the switch is turned on during the period when the magnetizing coil is instructed to magnetize by the controller to form a closed circuit with the magnetizing coil to cause the current generated by the back electromotive force generated by the magnetizing coil to flow circularly and is turned off during the period when the magnetizing coil is instructed to be demagnetized by the controller.

### FFECT OF THE INVENTION

According to the invention, even if the magnetizing force of the magnet block weakens, as long as the mold is clamped to the magnet block in its initial position, the mold can be closed and re-magnetized, thereby allowing work to be resumed in a short time.

### BRIEF DESCRIPTION OF THE DRAWINGS

FIG. 1 illustrates an injection molding machine and a magnetic clamping device. FIG. 1A is an overall view of the injection molding machine, FIG. 1B is a view of the magnetic clamping device 10 viewed from the side to which the mold is attached, FIG. 1C is a view showing a situation when the magnetic clamping device is in a demagnetized state, and FIG. 1D is a view showing a situation when the magnetic clamping device is in a magnetized state.
FIG. 2 illustrates a circuit of a magnetic clamping device. FIG. 2A shows a power source 30 for magnetizing coil, and FIGS. 2B to 2D illustrate waveforms.
FIG. 3 shows a change in magnetic flux, FIG. 3A is a comparative example, and FIG. 3B is a view illustrating a case in accordance with the present embodiment.
FIG. 4 shows a change in magnetic flux, FIG. 4A is a comparative example, and FIG. 4B is a view illustrating a case in accordance with the present embodiment.
FIG. 5 shows a change in magnetic flux.
FIG. 6 is a view illustrating an application example of a magnetic clamping device.

### PREFERRED EMBODIMENT OF THE INVENTION

An example of embodiments of the present invention will be described. In the following description, magnetic clamping devices 10, 20 mounted on an injection molding machine 1 will be explained as an example

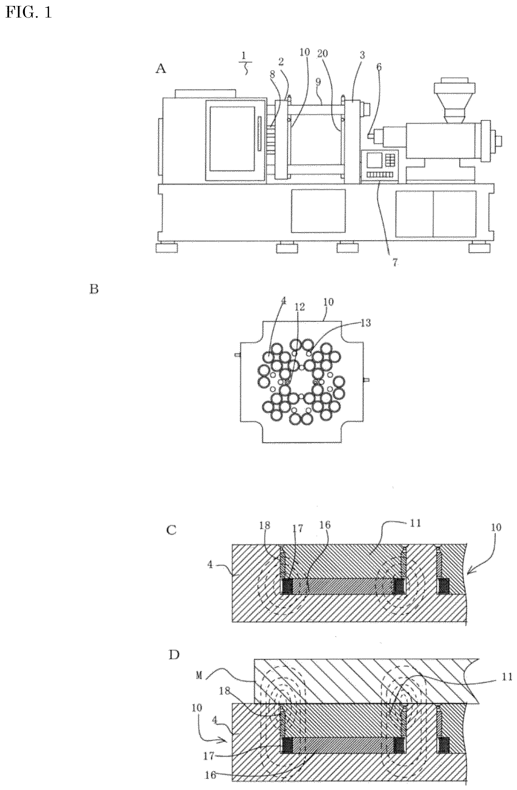

FIG. 1 is a view illustrating the injection molding machine 1 and the magnetic clamping devices 10, 20. In FIG. 1A, the injection molding machine 1 includes right and left facing platens 2, 3 and a guide rod 9 that guides and supports the left-side platen 2 freely moving forward and backward in right and left directions. The magnetic clamping devices 10, 20, which magnetically adsorb the molds, are mounted on the platens 2, 3, respectively. Numeral 6 is a nozzle for injecting a resin, 7 is a controller with an input section and a liquid crystal display screen, and 8 is an ejector rod for extruding an injection molding from a mold. The controller 7 controls the magnetic clamping devices 10, 20.

FIG. 1B is a view of the magnetic clamping device 10 viewed from the side on which the mold is mounted. A main body 4 of the magnetic clamping device 10 is made of a ferromagnetic material. A large number of magnet blocks 11 made of ferromagnetic material are embedded in the surface side of the main body 4. In addition, a proximity sensor 12 and a coil for detecting changes in magnetic flux (not shown) are disposed. An ejector rod 8 is inserted into a through-hole 13. The magnetic clamping device 20 is almost the same as the magnetic clamping device 10, and its description is omitted. The same applies hereinafter.

FIG. 1C shows the magnetic clamping device 10 in a demagnetized state. A neodymium magnet (non-reversible magnet) 18 surrounds the outer periphery of a magnet block 11 and has, for example, an S-pole toward the magnet block 11 side and an N-pole toward the main body 4 side. An alnico magnet (reversible magnet) 16 is a permanent magnet that has an N-pole toward the front side of the magnetic clamping device 10 (upper-side in drawing) and an S-pole toward the back side. Magnetic flux does not leak out to the surface of the magnetic clamping device 10, in which the magnetic flux passes through the magnetic circuit composed of the neodymium magnet 18, the main body 4, the alnico magnet 16, and the magnet block 11, and the mold is not adsorbed.

FIG. 1D shows the magnetic clamping device 10 in a magnetized state. By passing a positive-side current through the magnetizing coil 17, the magnetic pole of the alnico magnet 16 is reversed. The alnico magnet 16 is magnetized to form a permanent magnet with the front side of the magnetic clamping device 10 as S-pole and the back side as N-pole.

On the front side of the magnetic clamping device 10, both the neodymium magnet 18 and the alnico magnet 16 are coupled to the magnet block 11 as S-poles. With the mold M pressed against the front side of the magnetic clamping device 10, these magnetic fluxes pass through the mold M. Therefore, a magnetic circuit composed of a neodymium magnet 18, a magnet block 11, a mold M and a main body 4, and a magnetic circuit composed of an alnico magnet 16, a magnet block 11, a mold M and a main body 4 are formed, respectively. Once this condition is achieved, the magnetic circuits continue to hold even if the current in the magnetizing coil is cut off. In order to demagnetize the magnetic clamping device 10 from this state, the alnico magnet 16 is demagnetized by passing a negative-side current

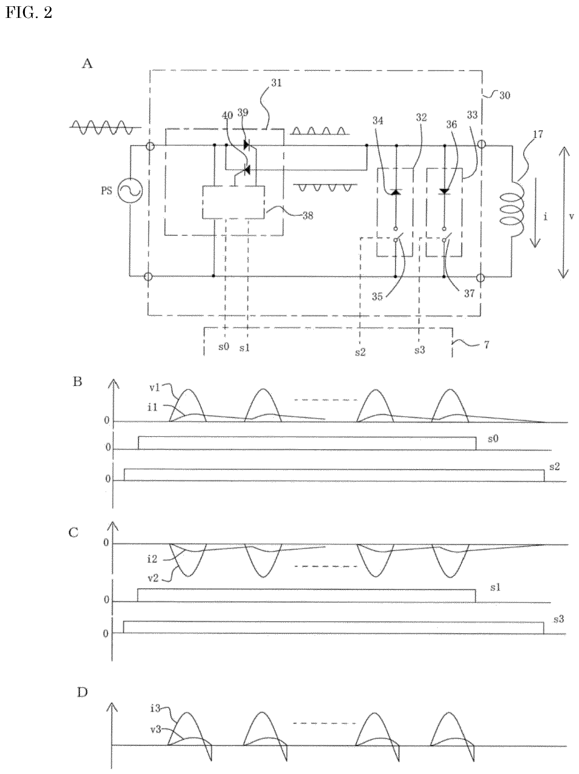

FIG. 2 is a view showing a circuit of the magnetic clamping device 10. FIG. 2A shows a power source 30 for the magnetizing coil, wherein the power source 30 is controlled by control signals s0 to s3 of the controller 7. The controller 7 generates the control signals s0, s2 when instructing the power source 30 to magnetize the magnetizing coil 17, and generates the control signals s1, s3 when instructing the power source 30 to demagnetize the magnetizing coil 17. The power source 30 is connected to a commercial alternating-current power source PS supplied for industrial use and includes a rectification circuit 31, a first circulating circuit 32 and a second circulating circuit 33. The rectification circuit 31 is a circuit that performs half-wave rectification on an alternating current, and includes an ignition circuit 38 and thyristors 39, 40. The ignition circuit 38 sends a trigger signal to the thyristor 39 when the magnetization of the magnetic clamping device 10 is instructed by the control signal s0. An ignition angle is set to a rising period in which the voltage from the alternating-current power source PS increases from 0 V to the positive side, to generate positive-side half-sine wave pulses. Therefore, while the control signal s0 rises, the positive-side pulses are generated continuously. The ignition circuit 38 sends a trigger signal to the thyristor 40 when the demagnetization of the magnetic clamping device 10 is instructed by the control signal s1. The ignition angle generates negative-side half-sine wave pulses during a falling period in which the voltage from the alternating-current power source PS increases from 0 V to the negative side. Therefore, while the control signal s1 rises, the negative-side pulses are generated continuously. The number of consecutive positive-side or negative-side pulses is controlled by controlling the period during which the control signals s0, s1 are rising.

The pulses generated by the rectification circuit 31 are applied to the magnetization coil 17 as they are. In the capacitor-type magnetizer, energy is stored in the capacitor and then supplied to the magnetizing coil 17, but this embodiment differs in that it is directly supplied to the magnetizing coil 17. The first circulating circuit 32 and the second circulating circuit 33 are connected to the magnetizing coil 17 in parallel, respectively. The first circulating circuit 32 includes a diode 34 and a switch 35 that are serially connected to each other, and the second circulating circuit 33 includes a diode 36 and a switch 37 that are serially connected to each other. The diode 34 and the diode 36 have opposite polarity, with anode and cathode facing opposite directions. A first recovery diode (FRD) is used as the diode 34 and the diode 36. The switch 35 and the switch 37 are turned on and off by the control signals S2, S3, respectively. The control signal S2 turns on the switch 35 during magnetization of the magnetic clamping device 10. The control signal S3 turns on the switch 37 during demagnetization of the magnetic clamping device 10. A relay circuit is used as the switch 35 and the switch 37.

FIG. 2B shows waveforms of a voltage v across the magnetizing coil 17, a current i flowing through the magnetizing coil 17 and the control signals s0, s2 in magnetizing. The switch 35 is turned on by the control signal s2 (the switch 37 remains off). The control signal s0 causes the rectification circuit 31 to generate positive-side pulses v1. The control signal s2 causes the first circulating circuit 32 and the magnetizing coil 17 to form a closed circuit. During the period when the magnetization is instructed by the controller 7, even during the period when the voltage between each pulse v1 disappears, the current i1 that attempts to continue flowing due to the back electromotive force of inductance component of the magnetizing coil circulates through the closed circuit, is consumed and attenuated by the resistance component of the magnetizing coil 17. When the inductance component of the magnetizing coil 17 is large, the attenuation of the current i1 becomes gradual, and even when the voltage of the pulses v1 disappears, a relatively large current value can continue to flow. This means that the magnetic flux generated by the magnetizing coil 17 is maintained at a high level.

FIG. 2C shows a waveform of demagnetization of the magnetizing coil 17. During a period when demagnetization is indicated by the controller 7, the switch 37 is turned on by the control signal s3 (the switch 35 remains off), and the control signal s1 causes the rectification circuit 31 to generate a negative side pulse v2. In the case of demagnetization of the magnetizing coil 17, a closed circuit for closing the magnetizing coil 17 is formed by the second circulating circuit 33, and the current i2 flows in a direction opposite to the case of magnetization.

FIG. 2D shows a waveform of magnetization when the first circulating circuit 32 and the second circulating circuit 33 are not present. In this case, during the period in which the voltage disappears between each pulse v1, the current i3 tends to continue flowing for a certain period due to back electromotive force of the inductance component of the magnetizing coil 17, and a negative voltage appears. However, this current i3 enters the rectification circuit 31 and circulates through the magnetization coil 17, making it impossible to sustain the generation of magnetic flux.

Needless to say, the switch 37 is off when the magnetic clamping device 10 is magnetized, and the switch 35 is off when the magnetic clamping device 10 is demagnetized (the magnetizing coil 17 is demagnetized).

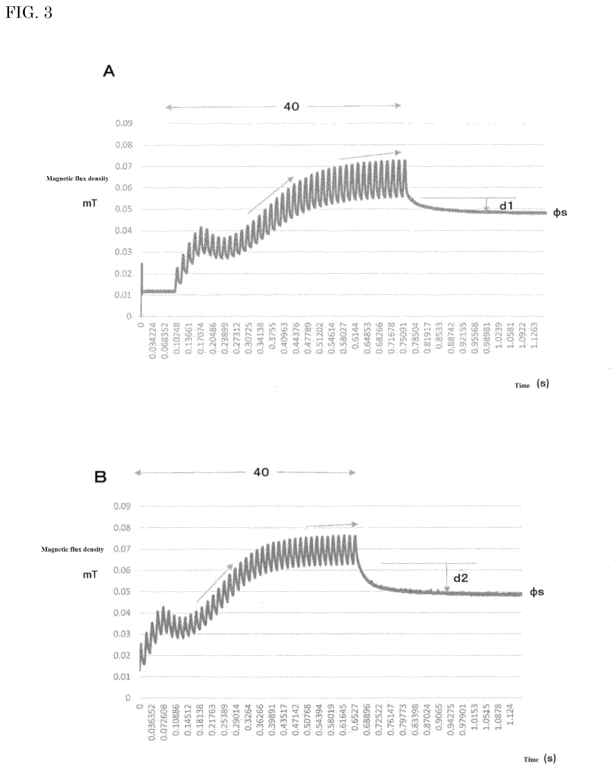

FIG. 3 shows a magnetic flux density measured by a Tesla meter on the surface of the magnetic clamping device 10 on which the mold is attached. If the remaining magnetic flux density is measured to be the saturation magnetic flux φs after the current flowing through the magnetizing coil 17 disappears, it is assumed that the magnetic clamp device 10 is normally magnetized.

### (Experimental Example 1)

FIG. 3A is a case where the first circulating circuit 32 and the second circulating circuit 33 are not provided (comparative example). FIG. 3B is a case where the first circulating circuit 32 and the second circulating circuit 33 are provided (experimental example). In the magnetization of the magnetic clamping device 10, forty pulses were supplied to the magnetizing coil 17. The final residual saturation flux φs (about 0.05 mT as measured by Tesla meter) is the same in both cases, but the rate of increase in magnetic flux density is faster in FIG. 3B, and almost reaches the upper limit of increase in the latter half. In particular, regarding the difference in magnetic flux density from the last pulse to the saturation magnetic flux φs, the difference d2 in FIG. 3B was clearly larger than the difference d1 in FIG. 3A, indicating that a strong magnetic flux is given to the alnico magnet 16.

In addition, in demagnetization, forty pulses were supplied to the magnetizing coil 17, but no significant difference was observed between the two.

### (Experimental Example 2)

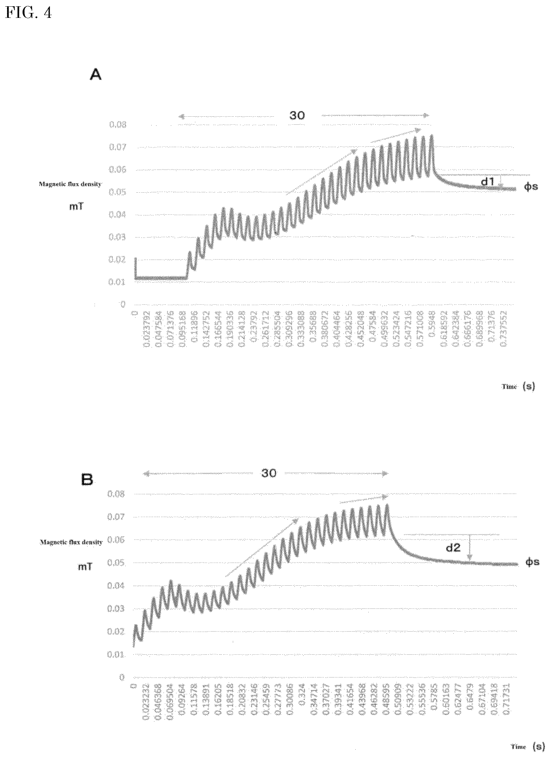

FIG. 4A is a case where the first circulating circuit 32 and the second circulating circuit 33 are not provided (comparative example). FIG. 4B is a case where the first circulating circuit 32 and the second circulating circuit 33 are provided (experimental example). Thirty pulses were supplied to the magnetizing coil 17. The residual saturation magnetic flux φs is the same in both cases, but both the differences d1 and d2 have decreased, and the difference d1 observed in FIG. 4A is not a sufficient margin for a product.

In addition, in demagnetization, thirty pulses were supplied to the magnetizing coil 17, but no significant difference was observed between the two.

### (Experimental Example 3)

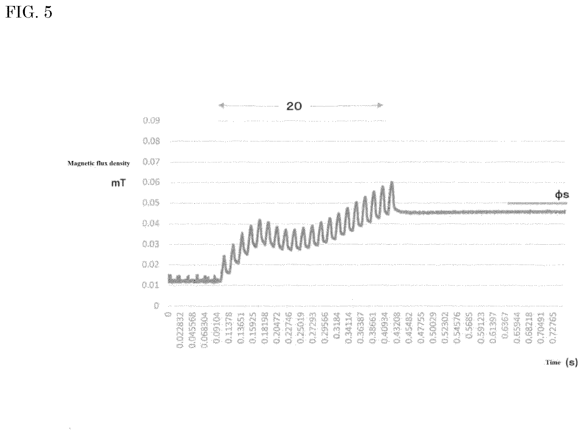

FIG. 5 is a case where the first circulating circuit 32 and the second circulating circuit 33 are provided (experimental example). Twenty pulses were supplied to the magnetizing coil 17. The residual magnetic flux density did not reach the saturation flux φs of Experimental Examples 1 and 2.

Furthermore, demagnetization was possible even with twenty pulses. Although not shown in the figure, it was also confirmed that demagnetization occurred even with ten pulses.

From the above experimental examples, it was found that, without the first circulating circuit 32 and the second circulating circuit 33, forty pulses must be supplied to the magnetizing coil 17 to achieve sufficient magnetization, whereas with the first circulating circuit 32 and the second circulating circuit 33, thirty pulses are enough to achieve sufficient magnetization. The reduction from forty pulses to thirty pulses leads to 25% off of the current consumption.

On the other hand, in the demagnetization, there was no noticeable difference between the presence or absence of the first circulating circuit 32 and the second circulating circuit 33.

Therefore, when it is desired to suppress the power consumption of the magnetizing coil 17, at least only the first circulating circuit 32 of the first circulating circuit 32 and the second circulating circuit 33 should be provided, and the switch 35 of the first circulating circuit 32 should be turned during magnetizing and turned off during demagnetizing. In addition, the number of pulses supplied to the magnetizing coil 17 during demagnetizing should be reduced more than the number of pulses during magnetizing. Further, the second circulating circuit 33 can be added. Since the rectification circuit 31 does not generate pulses during demagnetizing and non-demagnetizing, the switches 35, 37 can be in either on or off state.

According to the present embodiment, a closed circuit including the magnetizing coil 17 can be configured by turning on the first circulating circuit 32 at least during the magnetizing period and turning off it at least during the demagnetizing period, to circulate and continue to flow the current using the electromotive force of the magnetizing coil 17 through the magnetizing coil 17 during the period when the pulse is lost, so that the magnetic flux for magnetizing can be maintained in high state. According to this, it is possible to effectively reduce power consumption during magnetizing.

In addition, power consumption can be reduced by reducing the number of pulses supplied to the magnetizing coil 17 during demagnetizing than the number of pulses during magnetizing.

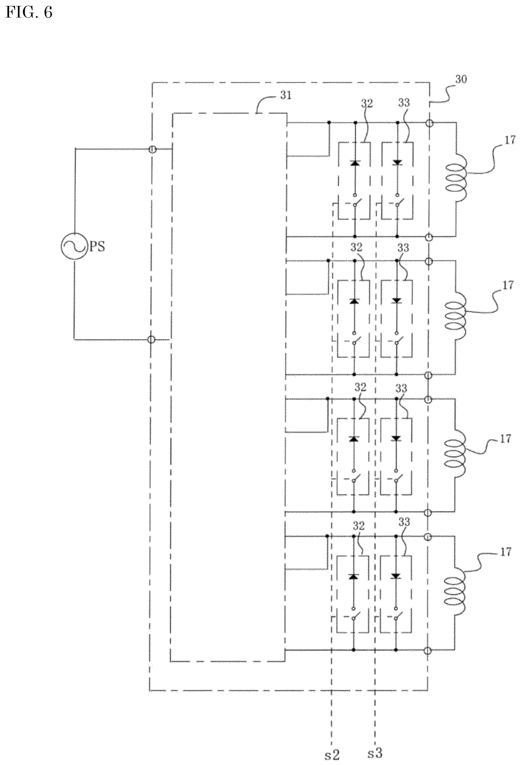

FIG. 6 shows an application example of the present embodiment. This is an example in which a large number of magnetizing coils 17 are arranged in the magnetic clamping devices 10 and 20, and one power supply system cannot cover the current. A power source 30 is provided in which the power supply system from the rectification circuit 31 is four systems. The first circulating circuit 32 and the second circulating circuit 33 are connected in series to the magnetizing coil 17 to which electric power is supplied in each system, so that the closed circuit can be formed. The first circulating circuit 32 and the second circulating circuit 33 of each system are commonly controlled by the control signals s1 and s2, respectively.

In the above embodiment, although an ignition circuit 38 is provided in the rectification circuit 31, the controller 7 can directly provide a trigger signal to the thyristors 39 and 40 to directly control the number of positive or negative pulses. Although the thyristors 39 and 40 are used for the rectification circuit 31, other switching elements can be used.

### DESCRIPTION OF REFERENCE NUMERAL

- 1: injection molding machine
- 2, 3: platen
- 4: main body
- 7: controller
- 8: ejector rod
- 9: guide rod
- 10, 20: magnetic clamping device
- 11: magnet block
- 12: proximity sensor
- 13: through hole
- 16: alnico magnet
- 17: magnetizing coil
- 18: neodymium magnet
- 30: power source
- 31: rectification circuit
- 32: first circulating circuit
- 33: second circulating circuit
- 34, 36: diode
- 35, 37: switch
- 38: ignition circuit
- 39, 40: thyristor

## Claims

1. A magnetic clamping device in which a plurality of magnet blocks having a non-reversible magnet and a reversible magnet whose polarity can be reversed by a magnetizing coil are arranged on a surface of a plate made of magnetic material, and in which magnetically clamps a mold when in a magnetized state, comprising:
a controller;
a rectification circuit performing half-wave rectification on an alternating-current power source, supplying positive-side pulses to the magnetizing coil of the reversible magnet for a given period when being instructed by the controller to magnetize the magnetizing coil, and supplying negative-side pulses to the magnetizing coil for a predetermined number of negative side pulses to the magnetizing coil of the reversible magnet when being instructed to demagnetize the same; and
a first circulating circuit having a diode and a switch that are serially connected to each other, wherein the switch is turned on during a period in which magnetization is instructed by the controller to form a closed circuit with the magnetizing coil and to circulate a current obtained from back electromotive force generated by the magnetizing coil, and is turned off during a period in which demagnetization of the magnetizing coil is instructed by the controller.

2. The magnetic clamping device of claim 1, wherein number of positive-side pulses generated by the rectification circuit is greater than number of negative-side pulses.

3. The magnetic clamping device of claim 1, further comprising: a second circulating circuit having a diode and a switch that serially connected to each other, wherein the switch is turned on during a period in which demagnetization is instructed by the controller to form a closed circuit with the magnetizing coil and to circulate a current obtained from back electromotive force generated by the magnetizing coil, and is turned off during a period in which magnetization of the magnetizing coil is instructed by the controller, and
wherein polarities of the diodes of the first circulating circuit and the second circulating circuit are opposite to each other.
